# EUROPEAN PATENT APPLICATION

(11) **EP 4 443 164 A1**
(43) Date of publication of application: **09.10.2024**
(21) Application number: 22900197.9
(22) Date of filing: 04.11.2022
(51) Int. Cl.: G01N 35/00, G01N 35/04, G01N 35/10

(54) **FULLY-AUTOMATIC LINE-TYPE IMMUNOLOGICAL DETECTION SYSTEM AND DETECTION METHOD THEREOF**

(30) Priority: 03.12.2021 CN 202111473454
(71) Applicant: Joinstar Biomedical Technology Co., Ltd., Hangzhou, Zhejiang 310000 (CN)
(72) Inventor: WANG, Guofeng, Hangzhou, Zhejiang 310000 (CN); MENG, Xiong, Hangzhou, Zhejiang 310000 (CN); HONG, Longbin, Hangzhou, Zhejiang 310000 (CN); PANG, Jianqiang, Hangzhou, Zhejiang 310000 (CN); ZHANG, Yu, Hangzhou, Zhejiang 310000 (CN); SUN, Chenxian, Hangzhou, Zhejiang 310000 (CN); ZHOU, Xuyi, Hangzhou, Zhejiang 310000 (CN)
(74) Representative: Kransell & Wennborg KB
(86) International application number: PCT/CN2022/129718
(87) International publication number: WO 2023/098392

(57) **Abstract**

A fully automatic flow-through immunoassay system and an immunoassay method thereof are disclosed. The immunoassay method is realized in a system comprising a to-be-detected area, a bar code recognition area, a conveying area, a plurality of detection areas, a storage area, a controller and a power supply, each detection area comprising a sample feeding/recovery unit, a conveyor belt unit, a shaking unit, a strip stacking unit, a reaction cup transferring unit, a sample arm, a reagent arm, a reagent chamber unit, an incubation unit, a liquid path unit, a waste recovery unit and a detection unit. The fully automatic flow-through immunoassay system and the immunoassay method thereof in the present invention are applicable to multiple sample types, multi-index and multi-thread pipelined asynchronous detection is implemented, so that the detection speed and the application flexibility are greatly improved, and the application requirements of more customers can be met; and meanwhile, the detection waiting time is reduced, and the use convenience is further improved.

## Description

### FIELD OF THE INVENTION

The present invention relates to a fully automatic immunoassay system, particularly to a fully automatic flow-through immunoassay system and an immunoassay method thereof.

### BACKGROUND OF THE INVENTION

This apparatus is an instrument-dependent fully automatic POCT quantitative system. This system realizes the identification of multiple sample types and the pre-processing of samples that may be required by means of a unique sample injection unit; meanwhile, by means of a sample addition unit and a consumable unit (a reaction cup transferring unit and a reaction strip stacking unit), the sample addition and the entire dry fluorescence reaction process are completed, and finally the detection is completed. This system has realized the automated, informatized, integrated, personalized and modular rapid detection of POCT. Multiple sample types can be directly detected on the machine, which meets the development requirements of hospital informatization and the multi-purpose needs and quality assurance of clinical emergencies, having the following characteristics:
It can support a variety of samples to be directly tested on the machine. The original tubes can be directly tested on the machine without uncapping, which avoids the biosafety risks and eliminates the need for cumbersome manual sample pre-processing;
The entire reaction process is temperature-controllable;
This apparatus can detect multiple indicators simultaneously, and has achieved demonstration applications in rapid detection of cardiovascular diseases, infectious diseases, women's health, infections, embolism, etc.

This apparatus is modular and can be used alone or with machine; besides, it has expandability and can be interconnected with the same type of equipment (that meets the interconnection requirements). This apparatus is a rare immunoassay assembly line in the industry. The detection speed of a single unit is more than 120 T/H. The speed should be higher than that of the dry immunoanalyzer in the industry. It ensures that JS3000 can adapt to multiple sample types and multi-index on-machine detection, and has the advantages of full-process temperature control, greatly improves the detection speed and application flexibility; in addition, it can adapt to more customers' application needs, reduce the waiting time, further improving the convenience of use.

### SUMMARY OF THE INVENTION

An object of the present invention is to provide a fully automatic flow-through immunoassay system and an immunoassay method thereof in view of the shortcomings of the prior art.

In order to achieve the above object, the present invention adopts the following technical solutions:
A fully automatic flow-through immunoassay system includes a to-be-detected area, a bar code recognition area, a conveying area, a plurality of detection areas, a storage area, a controller and a power supply; each detection area includes a sample feeding/recovery unit, a conveyor belt unit, a shaking unit, a strip stacking unit, a reaction cup transferring unit, a sample arm, a reagent arm, a reagent chamber unit, an incubation unit, a liquid path unit, a waste recovery unit and a detection unit;
a plurality of to-be-detected samples are stored in the to-be-detected area, and the to-be-detected samples are placed in test tubes on a test tube holder; the test tubes are provided with recognition bar codes corresponding to the information of current to-be-detected samples; the to-be-detected area is connected to the detection areas, the storage area and the sample feeding/recovery units of the detection areas by means of the conveying area; one side of each sample feeding/recovery unit is connected to the conveying area and used for conveying the to-be-detected samples and detected samples between the conveying area and the detection areas, and the other side of each sample feeding/recovery unit is provided with the conveyor belt unit and used for conveying the to-be-detected samples to the shaking unit one by one; a channel of the conveying area is provided with the bar code recognition area; the conveyor belt unit is adjacent to the shaking unit; the sample arm is arranged above the shaking unit; one side of the sample arm is provided with the strip stacking unit; the strip stacking unit is provided with a strip conveying mechanism; the reaction cup transferring unit is arranged above the strip stacking unit, and the reaction cup transferring unit is provided with a reaction cup conveying apparatus; the reaction cup conveying apparatus is adjacent to the reagent arm; the waste recovery unit is arranged below the reaction cup transferring unit; one side of the reagent arm is provided with the reagent chamber unit, the reagent arm is connected to the liquid path unit, and the other side of the reagent arm is provided with the incubation unit; one side of the incubation unit is provided with the detection unit; pushing mechanisms are arranged among the strip stacking unit, the incubation unit and the detection unit; the pushing mechanism is a push rod; with the moving of the push rod, strips are pushed from the strip stacking unit to the incubation unit and the detection unit; the sample arm and the reagent arm are connected with the liquid path unit.

Further, a sensor and the push rod are arranged between the conveying area and the storage area and the sample feeding/recovery unit; the sensor is used for detecting whether a holder for bearing the sample is in place or not; after the holder is in place, the push rod is started to push the holder into the unit; pull sheets are arranged at two sides of channels in the to-be-detected area, the storage area and the sample feeding/recovery unit respectively; the pull sheets are retractable movable pull sheets; the pull sheets are provided with electronic switches; after switching on, the pull sheets are completely unfolded along guide rails in two sides in a route movement process of the pull sheets pushing and pulling the sample holder; and after the sample holder is pushed and pulled to an appointed position, the pull sheets are retracted back to two sides of the channels.

Further, the shaking unit includes a test tube clamp, an anti-falling strip, a motor for shaking, a Z-axis motor and a Y-axis motor; the anti-falling strip is arranged above the test tube clamp and is used for preventing the test tube in the test tube clamp from falling off in a shaking-up process; the motor for shaking is movably connected to the test tube clamp; the test tube clamp performs shaking along the rotation of the motor for shaking; the Z-axis motor is movably connected to the motor for shaking through a belt and a rotary wheel on a Z-axis motor bracket; and the Y-axis motor is movably connected to the Z-axis motor through a belt and a rotary wheel on a Y-axis motor bracket, so that the test tube clamp can move frontward and backward and up and down, and the movement of lifting and descending the test tube from the holder is realized.

Further, the strip stacking unit includes clamping frames, fetching-clamping arms, push rods, clamping frame code scanners and clamping frame code scanner brackets; strips (cassettes) are placed in the clamping frames; the strips corresponding to different detection items are placed in different clamping frames; the clamping frame code scanners are arranged on the rear sides of the clamping frames and are used for distinguishing the test items of the strips in the clamping frames and the quantity of the strips; the clamping frame code scanners are arranged on the clamping frame code scanner brackets; fetching-clamping arm brackets are arranged below the clamping frame code scanner brackets; the push rods and the fetching-clamping arms are arranged on the fetching-clamping arm brackets; motors are arranged below the fetching-clamping arms and enable the fetching-clamping arms to rotate; clamping seats are arranged on the fetching-clamping arms; fetching-clamping telescopic rods are arranged below the clamping seats; fetching-clamping hooks are arranged at one ends of the fetching-clamping telescopic rods and are telescopic movable clamping hooks; when fetching the strips, the fetching-clamping telescopic rods extend forwards along the guide rails at the bottoms of the clamping frames, and the fetching-clamping hooks are propped against the bottoms of the clamping frames and extend forwards; fetching-clamping grooves are formed in the bottoms of the clamping frames; when the fetching-clamping hooks reach openings of the fetching-clamping grooves in the bottoms of the clamping frames, the clamping hooks smoothly slide into the grooves to hook the bottommost strips (cassettes) of the clamping frames; and the height of the clamping hooks is consistent with the thickness of the strips (cassettes).

Further, the reaction cup transferring unit includes a drawer, a reaction cup holder, a gripper, a reaction cup base, a movable cup holder, a gripper moving unit and a reaction cup base guide rail; one and/or more reaction cup holders are arranged in the drawer; empty reaction cups are stored in the reaction cup holder; the gripper is arranged above the reaction cup holder; the gripper is connected to the gripper moving unit through a gripper bracket; the reaction cup base is connected to the reaction cup base guide rail through the movable cup holder; the gripper moving unit includes the gripper bracket and a movable bracket; the movable bracket is controlled to move back and forth through the motor; the gripper bracket is arranged on the movable bracket and is movably connected to an X-direction motor through a belt and a transmission wheel, so as to control the gripper to move left and right; a Z-direction motor is arranged on the gripper bracket; the Z-direction motor is movably connected to the gripper through the belt and the transmission wheel, so as to control the gripper to move up and down; the guide rail is movably connected to the movable cup holder; the movable cup holder can move along the guide rail; the reaction cup base is arranged on the movable cup holder; the reaction cup base is provided with a reset spring; the gripper is provided with an electromagnetic valve and gripping tongs; the reaction cup guide rail is arranged on a guide rail bracket; the guide rail bracket is movably connected to the reagent arm through the motor, the belt and the transmission wheel; a double-needle bracket is arranged on the reagent arm; a reagent needle and a waste liquid needle are arranged on the double-needle bracket; and the reagent needle and the waste liquid needle are connected to the liquid path unit.

Further, a sample arm includes a sample needle, a stirring device, a movable rod, a motor bracket, an arm group rotary motor and an arm group hoisting motor, wherein the sample needle is arranged on a sample needle seat; the sample needle seat is connected with the movable rod; the movable rod is provided with the stirring device; the movable rod is connected with the arm group motor bracket; the arm group motor bracket is provided with the arm group rotary motor and the arm group hoisting motor; the sample needle seat is provided with an anti-collision device; the anti-collision device is arranged at the top of the sample needle; a buffering space is manually arranged so as to prevent a needle head from being abutted when the sample needle is hoisted and moved and hard damages are generated; the stirring device is provided with a direct-current motor; the direct-current motor is connected with an eccentric sheet; the eccentric sheet is provided with a sample needle through hole; a needle washing tank is arranged below the sample needle through hole. The sample needle is hoisted and moved through the sample needle through hole and the through hole is formed in the eccentric sheet; when the direct-current motor drives the eccentric sheet, the sample needle through hole surrounding the sample needle rotates and the sample needle is driven to stir; the needle washing tank below the sample needle is connected with washing liquid and can be used for washing an outer wall of the sample needle; the arm group rotary motor and the arm group hoisting motor on the arm group motor bracket are connected with the movable rod through a transmission wheel and a belt. The hoisting and the rotation of the movable rod are realized through forward and backward rotation of the motor; meanwhile, the hoisting and the rotation of the sample needle seat are driven; a code disk is arranged between the movable rod and the arm group rotary motor and the rotation degree of a rocker arm of the sample needle is calibrated through the code disk.

Further, the reagent chamber unit includes a cooling fan, a cooling fin, reagent bottles, a chamber body, a heat preservation layer, a window, a barcode printer, a sensor, a refrigeration sheet and an air guide device; the reagent bottles are distributed in a reagent tray in a sector shape; the bottom of the reagent tray is connected with a bearing; the bearing is connected with a stepping motor and a stepping sensor; the motor is connected to the bearing and can drive the whole chamber body to rotate; the reagent tray is provided with notches corresponding to barcodes on the reagent bottles; the chamber body is provided with the window corresponding to the notches; the barcode printer is arranged on one side of the window; the chamber body is rotated, and then the barcode printer can read information of each reagent bottle with the rotating of the chamber body; the cooling fin is arranged in the center of the reagent tray; the cooling fan is arranged above the cooling fin; the refrigeration sheet is arranged below the chamber body; the refrigeration sheet is connected to the air guide device; the stepping motor and the stepping sensor are connected below the reagent tray; the motor is connected to the bearing and can drive the whole chamber body to rotate; the heat preservation layer is arranged outside the chamber body; the heat preservation layer is heat preservation cotton; and the bottom of the chamber body is connected to the liquid path unit and is used for discharging condensed water generated in a refrigeration process.

Further, the liquid path unit includes a reagent needle internal and external cleaning liquid path, a sample needle inner side clean water cleaning liquid path, a sample needle outer side cleaning liquid path and a waste liquid discharging liquid path;
the reagent needle internal and external cleaning liquid path includes a clean water bucket, a first pump, a first valve and a first needle washing tank which are communicated in sequence; the reagent needle is arranged in the first needle washing tank; one path of the first valve and a first plunger pump are connected to the inner part of the reagent needle through a reagent needle connector so as to clean the inner wall of the reagent needle; the other path of the first valve is connected to the first needle washing tank so as to clean the outer wall of the reagent needle; the first plunger pump can be used for extracting and discharging a reagent solution through the reagent needle;
the sample needle inner side clean water cleaning liquid path includes a clean water bucket, a second pump, a second valve, a second plunger pump and a fourth valve which are communicated in sequence; the second plunger pump is connected to the inner part of a sample needle through a sample needle connector; when the fourth valve is switched on, the sample needle inner side clean water cleaning liquid path is used for cleaning the inner wall of the reagent needle; the second plunger pump can be used for extracting and discharging a sample solution through the sample needle;
the sample needle outer side cleaning liquid path includes a liquid cleaning bucket, a third pump and a third valve which are communicated in sequence; the sample needle is arranged in a second needle washing tank; the third valve is connected to the outer wall of the second needle washing tank; and when the third valve is switched on, the sample needle outer side cleaning liquid path is used for cleaning the outer wall of the sample needle.

The liquid path system further includes a condensate and waste liquid discharging liquid path; the condensate and waste liquid discharging liquid path includes a waste liquid needle, a fifth pump and a fifth valve which are communicated in sequence; one path of the fifth valve is connected to the reagent tray through a reagent tray connector, and the other path of the fifth valve is connected to the waste liquid needle through a waste liquid needle connector; the fifth pump is used for discharging condensate in the reagent tray and waste liquid sucked by the waste liquid needle into a waste liquid bucket.

The bottom of the first needle washing tank is connected to a fourth pump; and the fourth pump is used for discharging the waste liquid of the first needle washing tank into the waste liquid bucket.

The bottom of the second needle washing tank is connected to a sixth pump; and the sixth pump is used for discharging the waste liquid of the second needle washing tank into the waste liquid bucket.

A filter and a connection joint are further arranged between the clean water bucket and the first pump and between the clean water bucket and the second pump.

A filter and a connection joint are further arranged between the liquid cleaning bucket and the third pump.

A filter is arranged between the reagent tray and the fifth valve.

Further, the incubation unit includes an incubation rack, a thermostat and an incubation sensor; the incubation rack is provided with a plurality of spaces for placing strips (cassettes); the thermostat is used for increasing the temperature inside the incubation rack; the incubation sensor is used for detecting the environment temperature in the incubation rack at any time; the incubation unit is used for controlling the movement of the incubation rack through an incubation rack motor and an incubation rack guide rail to correspond to the horizontal positions of the strips (cassettes) pushed by the push rod.

Further, the detection unit includes a detection clamping seat, a detection clamping seat support, and a detector arranged above the detection clamping seat; the detection clamping seat support moves along the guide rail through the motor, the belt and the transmission wheel; the push rod is used for pushing the strips (cassettes) meeting the incubation time of the incubation unit into the detection clamping seat; the detection clamping seat support is used for driving the detection clamping seat to move to the lower side of the detector for detecting; and after the detection is finished, the push rod is used for pushing the strips (cassettes) to a waste material hole; and the waste material hole is connected to the waste recovery unit.

A fully automatic flow-through immunoassay method involves a to-be-detected area, a bar code recognition area, a conveying area, a plurality of detection areas, a storage area, a controller and a power supply; each detection area includes a sample feeding/recovery unit, a conveyor belt unit, a shaking unit, a strip stacking unit, a reaction cup transferring unit, a sample arm, a reagent arm, a reagent chamber unit, an incubation unit, a liquid path unit, a waste recovery unit and a detection unit, and the system is implemented through the following steps:
step 1, conveying samples in the to-be-detected area through the conveying area, scanning codes during conveying to obtain the information of current to-be-detected samples, placing test tubes with the samples on a sample holder, and pasting corresponding bar code identifiers on test tube arms;
step 2, acquiring empty reaction cups from the reaction cup transfer units;
step 3, conveying the current to-be-detected samples to the sample injection/recovery units of the corresponding detection areas according to the obtained information of the to-be-detected samples, preparing corresponding strips by the strip stacking units, and preparing corresponding reagents by the reagent chamber units;
step 4, enabling the to-be-detected samples to enter the detection areas, sequentially grabbing the to-be-detected samples on the bracket by the shaking units, shaking, and then sequentially placing back to the bracket;
step 5, extracting the prepared reagents from the reagent chamber units by the reagent arms through reagent needles, injecting the reagents into the reaction cups, and then cleaning the interiors and bodies of the reagent needles on the reagent arms through the liquid path units;
step 6, extracting the to-be-detected samples which are shaken up by the sample arms through the sample needles, injecting the samples into the reaction cups, stirring, and after the to-be-detected samples on the support are all processed, conveying the detected samples to the storage area through the sample injection/recovery units;
step 7, extracting the stirred mixed solution by the sample arms through the sample needles, adding the mixed solution to the prepared strips, cleaning the interiors and bodies of the sample needles through the liquid path units, extracting a residual solution in the reaction cups by the reagent arms through waste liquid needles, then pushing the empty reaction cups to the waste recovery units through the waste liquid needles, and after the cleaning is finished, cleaning the waste liquid needles through the liquid path units;
step 8, conveying the strips added with the mixed solution into the incubation units, and meanwhile setting the incubation time;
   step 9, conveying the strips meeting the incubation time into the detection units for detection, and after the detection is finished, discarding the strips through holes in the detection units; and
step 10, obtaining final detection information.

By adopting the technical solution, the present invention has the beneficial effects that the system and the method are applicable to multiple sample types, multi-index and multi-thread pipelined asynchronous detection is implemented, so that the detection speed and the application flexibility are greatly improved, and the application requirements of more customers can be met; and meanwhile, the detection waiting time is reduced, and the use convenience is further improved.

### BRIEF DESCRIPTION OF THE DRAWINGS

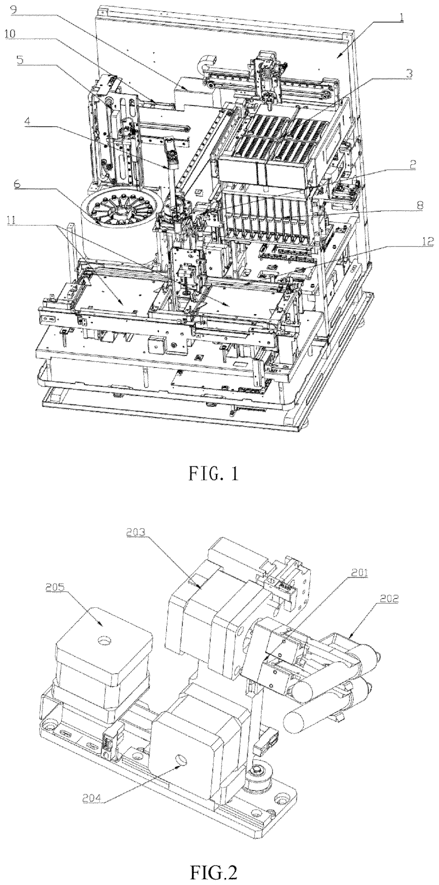

FIG. 1 is a schematic structural diagram of a detection area in a fully automatic flow-through immunoassay system provided by the present invention;
FIG. 2 is a schematic structural diagram of a shaking unit provided by the present invention;

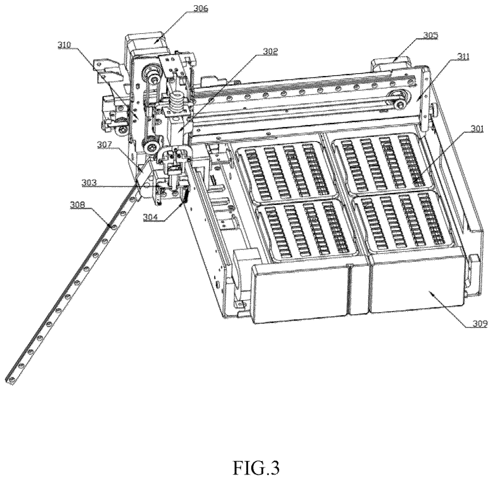

FIG. 3 is a schematic structural diagram of a reaction cup transferring unit provided by the present invention;

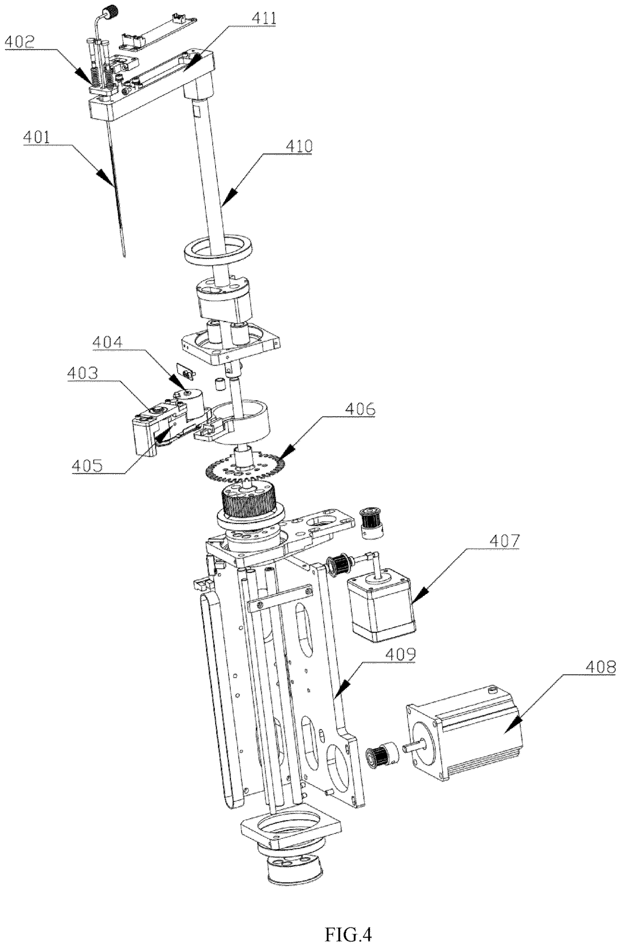

FIG. 4 is a schematic structural diagram of a sample arm provided by the present invention;

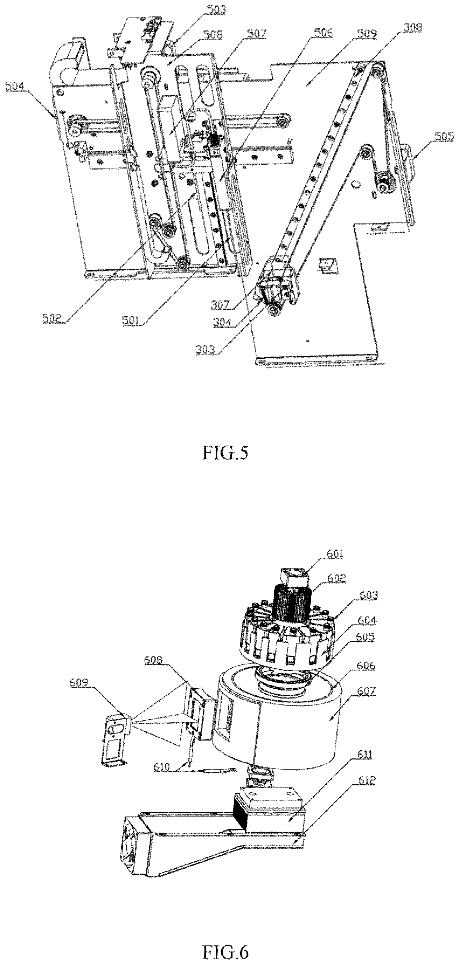

FIG. 5 is a schematic structural diagram of a reagent arm and part of a reaction cup transferring unit provided by the present invention;
FIG. 6 is a schematic structural diagram of a reagent chamber unit provided by the present invention;

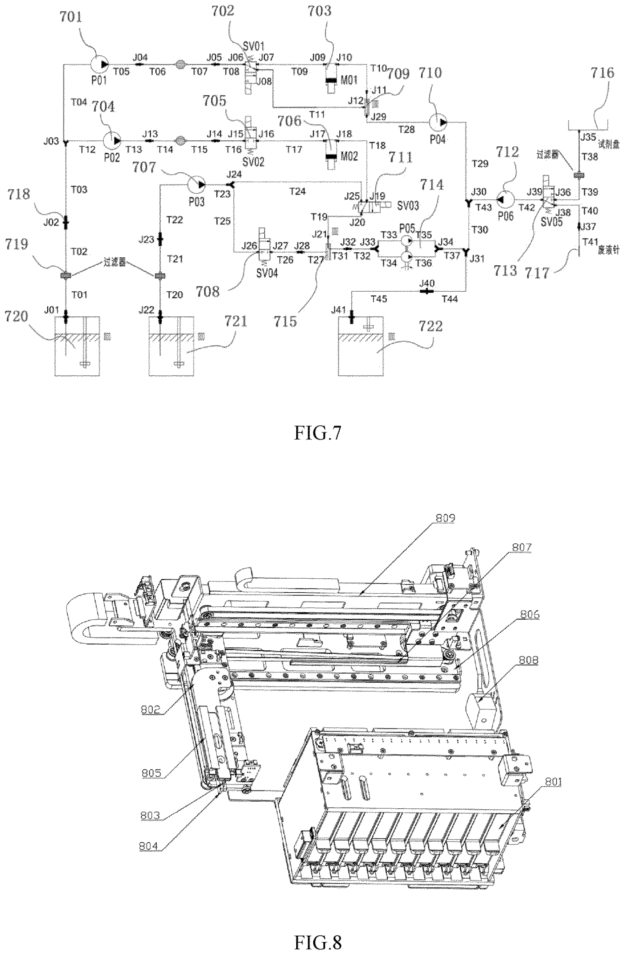

FIG. 7 is a schematic structural diagram of a detection area liquid path provided by the present invention;
FIG. 8 is a schematic structural diagram of a strip stacking unit provided by the present invention;

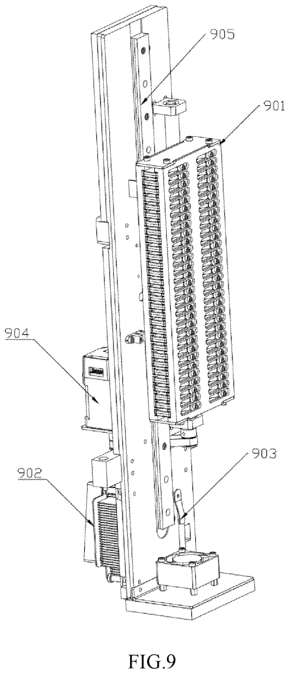

FIG. 9 is a schematic structural diagram of an incubation unit provided by the present invention;

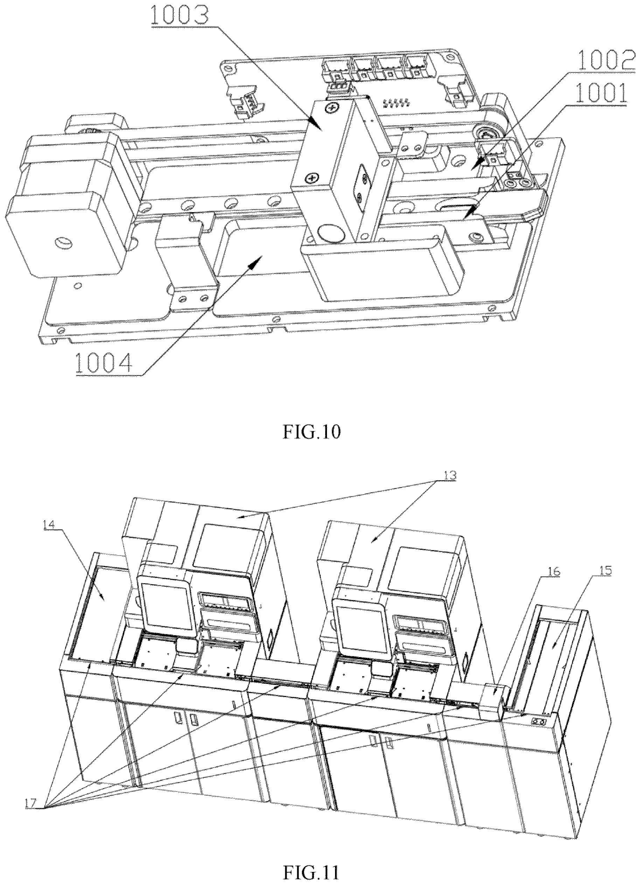

FIG. 10 is a schematic structural diagram of a detection unit provided by the present invention;
FIG. 11 is a schematic structural diagram of a fully automatic flow-through immunoassay system provided by the present invention.

Wherein, 1, equipment bracket, 2, shaking unit, 3, reaction cup transferring unit, 4, sample arm, 5, reagent arm, 6, reagent chamber unit, 7, liquid path unit, 8, strip stacking unit, 9, incubation unit, 10, detection unit, 11, sample feeding/recovery unit, 12, conveyor belt unit, 13, detection area, 14, storage area, 15, to-be-detected area, 16, bar code recognition area, 17, conveying area
201, test tube clamp, 202, anti-falling strip, 203, motor for shaking, 204, Z-axis motor, 205, Y-axis motor,
301, reaction cup holder, 302, gripper, 303, reaction cup base, 304, spring, 305, X-direction motor, 306, Z-direction motor, 307, movable cup holder, 308, reaction cup base guide rail, 309, drawer, 310, gripper bracket, 311, movable bracket,
401, sample needle, 402, anti-collision device, 403, stirring device, 404, direct-current motor, 405, needle washing tank, 406, code disk, 407, arm group rotary motor, 408, arm group hoisting motor, 409, arm group motor bracket, 410, movable rod, 411, sample needle seat,
501, reagent needle, 502, waste liquid needle, 503, double-needle motor, 504, double-needle motor bracket, 505, guide rail motor, 506, reagent needle pump, 507, waste liquid needle pump, 508, double-needle bracket, 509, guide rail bracket,
601, cooling fan, 602, cooling fin, 603, reagent bottle, 604, reagent tray, 605, bearing, 606, chamber body, 607, heat preservation cotton, 608, window, 609, barcode printer, 610, sensor, 611, refrigeration sheet, 612, air guide device,
701, first pump, 702, first valve, 703, first plunger pump, 704, second pump, 705, second valve, 706, second plunger pump, 707, third pump, 708, third valve, 709, reagent needle connector, 710, fourth pump, 711, fourth valve, 712, fifth pump, 713, fifth valve, 714, sixth pump, 715, sample needle connector, 716, reagent tray connector, 717, waste liquid needle connector, 718, connector, 719, filter, 720, clean water bucket, 721, liquid cleaning bucket, 722, waste liquid bucket,
801, clamping frame, 802, fetching-clamping arm, 803, fetching-clamping hook, 804, fetching-clamping telescopic rod, 805, clamping seat, 806, fetching-clamping arm bracket, 807, push rod, 808, clamping frame code scanner, 809, clamping frame code scanner bracket,
901, incubation rack, 902, thermostat, 903, incubation sensor, 904, incubation rack motor, 905incubation rack guide rail,
1001, detection clamping seat, 1002, detection clamping seat support, 1003, detector, 1004, waste material hole.

### DETAILED DESCRIPTION

The present invention will be further described in detail below in conjunction with the accompanying drawings and specific embodiments.
A fully automatic flow-through immunoassay method involves a to-be-detected area 15, a bar code recognition area 16, a conveying area 17, a plurality of detection areas 13, a storage area 14, a controller and a power supply; each detection area 13 includes a sample feeding/recovery unit 11, a conveyor belt unit 12, a shaking unit 2, a strip stacking unit 8, a reaction cup transferring unit 3, a sample arm 4, a reagent arm 5, a reagent chamber unit 6, an incubation unit 9, a liquid path unit 7, a waste recovery unit, and a detection unit 10, and the system is implemented through the following steps:
step 1, conveying samples in the to-be-detected area through the conveying area 17, acquiring the information of current to-be-detected samples when passing through the bar code recognition area 16, placing test tubes with the samples on a sample holder, and pasting corresponding bar code identifiers on test tube arms;
step 2, acquiring empty reaction cups from the reaction cup transfer units 3;
step 3, conveying the current to-be-detected samples to the sample injection/recovery units 11 of the corresponding detection areas 13 according to the obtained information of the to-be-detected samples; due to a variety of detection items, blank strips corresponding to different detections are stored in different detection areas, and meanwhile, the remaining strips are used for detection in each area. When the blank strips are insufficient for the remaining test items, the system automatically allocates the current to-be-detected samples to the detection area 13 corresponding to the blank strips; preparing corresponding strips by the strip stacking units 8, and preparing corresponding reagents by the reagent chamber units 6;
step 4, enabling the to-be-detected samples to enter the detection areas 13, sequentially grabbing the to-be-detected samples on the bracket by the shaking units 2, shaking, and then sequentially placing back to the bracket;
step 5, extracting the prepared reagents from the reagent chamber units 6 by the reagent arms 5 through reagent needles, injecting the reagents into the reaction cups, and then cleaning the interiors and bodies of the reagent needles on the reagent arms 5 through the liquid path units 7;
step 6, extracting the to-be-detected samples which are shaken up by the sample arms 4 through the sample needles, injecting the samples into the reaction cups, stirring, and after the to-be-detected samples on the support are all processed, conveying the detected samples to the storage area 14 through the sample injection/recovery units 11;
step 7, extracting the stirred mixed solution by the sample arms 4 through the sample needles, adding the mixed solution to the prepared strips, cleaning the interiors and bodies of the sample needles through the liquid path units 7, extracting a residual solution in the reaction cups by the reagent arms 5 through waste liquid needles, then pushing the empty reaction cups to the waste recovery units through the waste liquid needles, and after the cleaning is finished, cleaning the waste liquid needles through the liquid path units 7;
step 8, conveying the strips added with the mixed solution into the incubation units 9, and meanwhile setting the incubation time;
step 9, conveying the strips meeting the incubation time into the detection units 10 for detection, and after the detection is finished, discarding the strips through holes 1004 in the detection units; and
step 10, obtaining final detection information.

A fully automatic flow-through immunoassay system includes a to-be-detected area 15, a bar code recognition area 16, a conveying area 17, a plurality of detection areas 13, a storage area 14, a controller and a power supply; each detection area includes a sample feeding/ recovery unit 11, a conveyor belt unit 12, a shaking unit 2, a strip stacking unit 8, a reaction cup transferring unit 3, a sample arm 4, a reagent arm 5, a reagent chamber unit 6, an incubation unit 9, a liquid path unit 7, a waste recovery unit, and a detection unit 10;
a plurality of to-be-detected samples are stored in the to-be-detected area 15, and the to-be-detected samples are placed in test tubes on a test tube holder; the test tubes are provided with recognition bar codes corresponding to the information of current to-be-detected samples; the to-be-detected area 15 is connected to the detection areas 13, the storage area 14 and the sample feeding/recovery units 11 of the detection areas 13 by means of the conveying area 17; one side of each sample feeding/recovery unit 11 is connected to the conveying area 17 and used for conveying the to-be-detected samples and detected samples between the conveying area 17 and the detection areas 13, and the other side of each sample feeding/recovery unit 11 is provided with the conveyor belt unit 12 and used for conveying the to-be-detected samples to the shaking unit 2 one by one; a channel of the conveying area 17 is provided with the bar code recognition area 16; the conveyor belt unit 12 is adjacent to the shaking unit 2; the sample arm 4 is arranged above the shaking unit 2; one side of the sample arm 4 is provided with the strip stacking unit 8; the strip stacking unit 8 is provided with a strip conveying mechanism; the reaction cup transferring unit is arranged above the strip stacking unit, and the reaction cup transferring unit is provided with a reaction cup conveying apparatus; the reaction cup conveying apparatus is adjacent to the reagent arm 5; the waste recovery unit is arranged below the reaction cup transferring unit 3; one side of the reagent arm 5 is provided with the reagent chamber unit 6, the reagent arm 5 is connected to the liquid path unit 7, and the other side of the reagent arm 5 is provided with the incubation unit 9; one side of the incubation unit 9 is provided with the detection unit 10; pushing mechanisms are arranged among the strip stacking unit 8, the incubation unit 9 and the detection unit 10; the pushing mechanism is a push rod; with the moving of the push rod, strips are pushed from the strip stacking unit 8 to the incubation unit 9 and the detection unit 10; the sample arm 4 and the reagent arm 5 are connected with the liquid path unit 7.

A sensor and the push rod are arranged between the conveying area 17 and the storage area 14 and the sample feeding/recovery unit 11; the sensor is used for detecting whether a holder for bearing the sample is in place or not; after the holder is in place, the push rod is started to push the holder into the unit; pull sheets are arranged at two sides of channels in the to-be-detected area 15, the storage area 14 and the sample feeding/recovery unit 11 respectively; the pull sheets are retractable movable pull sheets; the pull sheets are provided with electronic switches; after switching on, the pull sheets are completely unfolded along guide rails in two sides in a route movement process of the pull sheets pushing and pulling the sample holder; and after the sample holder is pushed and pulled to an appointed position, the pull sheets are retracted back to two sides of the channels.

The shaking unit 2 includes a test tube clamp 201, an anti-falling strip 202, a motor 203 for shaking, a Z-axis motor 204 and a Y-axis motor 205; the anti-falling strip 202 is arranged above the test tube clamp 201 and is used for preventing the test tube in the test tube clamp 201 from falling off in a shaking-up process; the motor 203 for shaking is movably connected to the test tube clamp 201; the test tube clamp 201 performs shaking along the rotation of the motor 203 for shaking; the Z-axis motor 204 is movably connected to motor 203 for shaking through a belt and a rotary wheel on a Z-axis motor bracket; and the Y-axis motor 205 is movably connected to the Z-axis motor 204 through a belt and a rotary wheel on a Y-axis motor bracket, so that the test tube clamp 201 can move frontward and backward and up and down, and the movement of lifting and descending the test tube from the holder is realized.

The strip stacking unit 8 includes clamping frames 801, fetching-clamping arms 802, push rods 807, clamping frame code scanners 808 and clamping frame code scanner brackets 809; strips (cassettes) are placed in the clamping frames 801; the strips corresponding to different detection items are placed in different clamping frames 801; the clamping frame code scanners 808 are arranged on the rear sides of the clamping frames 801 and are used for distinguishing the test items of the strips in the clamping frames and the quantity of the strips; the clamping frame code scanners 808 are arranged on the clamping frame code scanner brackets 809; fetching-clamping arm brackets 806 are arranged below the clamping frame code scanner brackets 809; the push rods 807 and the fetching-clamping arms 802 are arranged on the fetching-clamping arm brackets 806; motors are arranged below the fetching-clamping arms 802 and enable the fetching-clamping arms 802 to rotate; clamping seats 805 are arranged on the fetching-clamping arms 802; fetching-clamping telescopic rods 804 are arranged below the clamping seats 805; fetching-clamping hooks 803 are arranged at one ends of the fetching-clamping telescopic rods 804 and are telescopic movable clamping hooks; when fetching the strips (cassettes), the fetching-clamping telescopic rods 804 extend forwards along the guide rails at the bottoms of the clamping frames, and the fetching-clamping hooks 803 are propped against the bottoms of the clamping frames 801 and extend forwards; fetching-clamping grooves are formed in the bottoms of the clamping frames; when the fetching-clamping hooks reach openings of the fetching-clamping grooves in the bottoms of the clamping frames, the clamping hooks smoothly slide into the grooves to hook the bottommost strips (cassettes) of the clamping frames; and the height of the clamping hooks is consistent with the thickness of the strips (cassettes).

The reaction cup transferring unit 3 includes a drawer 309, a reaction cup holder 301, a gripper 302, a reaction cup base 303, a movable cup holder 307, a gripper moving unit and a reaction cup base guide rail 308; one and/or more reaction cup holders 301 are arranged in the drawer 309; empty reaction cups are stored in the reaction cup holder 301; the gripper 302 is arranged above the reaction cup holder 301; the gripper 302 is connected to the gripper moving unit through a gripper bracket 310; the reaction cup base 303 is connected to the reaction cup base guide rail 308 through the movable cup holder 307; the gripper moving unit includes the gripper bracket 310 and a movable bracket 311; the movable bracket 311 is controlled to move back and forth through the motor; the gripper bracket 310 is arranged on the movable bracket 311 and is movably connected to an X-direction motor 305 through a belt and a transmission wheel, so as to control the gripper 302 to move left and right; a Z-direction motor 306 is arranged on the gripper bracket 310; the Z-direction motor 306 is movably connected to the gripper 302 through the belt and the transmission wheel, so as to control the gripper 302 to move up and down; the guide rail is movably connected to the movable cup holder 307; the movable cup holder 307 can move along the guide rail; the reaction cup base 303 is arranged on the movable cup holder 307; the reaction cup base 303 is provided with a reset spring 304; the gripper 302 is provided with an electromagnetic valve and gripping tongs; the reaction cup guide rail 308 is arranged on a guide rail bracket; the guide rail bracket is movably connected to the reagent arm 5 through the motor, the belt and the transmission wheel; a double-needle bracket 508 is arranged on the reagent arm 5; a reagent needle 501 and a waste liquid needle 502 are arranged on the double-needle bracket 508; and the reagent needle 501 and the waste liquid needle 502 are connected to the liquid path unit 7.

A sample arm 4 includes a sample needle 401, a stirring device 403, a movable rod 410, an arm group motor bracket 409, an arm group rotary motor 407 and an arm group hoisting motor 408, wherein the sample needle 401is arranged on a sample needle seat 411; the sample needle seat 411 is connected with the movable rod 410; the movable rod 410 is provided with the stirring device 403; the movable rod 410 is connected with the arm group motor bracket 409; the arm group motor bracket 409 is provided with the arm group rotary motor 407 and the arm group hoisting motor 408; the sample needle seat 411 is provided with an anti-collision device 402; the anti-collision device 402 is arranged at the top of the sample needle 401; a buffering space is manually arranged so as to prevent a needle head from being abutted when the sample needle is hoisted and moved and hard damages are generated; the stirring device 403 is provided with a direct-current motor 404; the direct-current motor 404 is connected with an eccentric sheet; the eccentric sheet is provided with a sample needle through hole; a needle washing tank is arranged below the sample needle through hole. The sample needle 401 is hoisted and moved through the sample needle through hole and the through hole is formed in the eccentric sheet; when the direct-current motor 404 drives the eccentric sheet, the sample needle through hole surrounding the sample needle 401 rotates and the sample needle 401 is driven to stir; the needle washing tank below the sample needle 401 is connected with washing liquid and can be used for washing an outer wall of the sample needle; the arm group rotary motor 407 and the arm group hoisting motor 408 on the arm group motor bracket are connected with the movable rod through a transmission wheel and a belt. The hoisting and the rotation of the movable rod are realized through forward and backward rotation of the motor; meanwhile, the hoisting and the rotation of the sample needle seat are driven; a code disk 406 is arranged between the movable rod 410 and the arm group rotary motor 407 and the rotation degree of a rocker arm of the sample needle is calibrated through the code disk 406.

The reagent chamber unit 6 includes a cooling fan 601, a cooling fin 602, reagent bottles 603, a chamber body 606, a heat preservation layer, a window 608, a barcode printer 609, a sensor 610, a refrigeration sheet 611 and an air guide device 612; the plurality of reagent bottles 603 are distributed in a reagent tray 604 in a sector shape; the bottom of the reagent tray 604 is connected with a bearing; the bearing is connected with a stepping motor and a stepping sensor; the motor is connected to the bearing and can drive the whole chamber body 606 to rotate; the reagent tray 604 is provided with notches corresponding to barcodes on the reagent bottles 603; the chamber body 606 is provided with the window corresponding to the notches; the barcode printer 609 is arranged on one side of the window; the chamber body 606 is rotated, and then the barcode printer 609 can read information of each reagent bottle 603 with the rotating of the chamber body 606; the cooling fin 602 is arranged in the center of the reagent tray 604; the cooling fan 601 is arranged above the cooling fin 602; the refrigeration sheet 611 is arranged below the chamber body 606; the refrigeration sheet 611 is connected to the air guide device 612; the stepping motor and the stepping sensor are connected below the reagent tray 604; the motor is connected to the bearing and can drive the whole chamber body 606 to rotate; the heat preservation layer is arranged outside the chamber body 606; the heat preservation layer is heat preservation cotton 607; and the bottom of the chamber body 606 is connected to the liquid path unit 7 and is used for discharging condensed water generated in a refrigeration process.

The liquid path unit 7 includes a reagent needle internal and external cleaning liquid path, a sample needle inner side clean water cleaning liquid path, a sample needle outer side cleaning liquid path and a waste liquid discharging liquid path;
The reagent needle 501 internal and external cleaning liquid path includes a clean water bucket 720, a first pump 701, a first valve 702 and a first needle washing tank which are communicated in sequence; the reagent needle 501 is arranged in the first needle washing tank; one path of the first valve 702 and a first plunger pump 703 are connected to the inner part of the reagent needle 502 through a reagent needle connector 709 so as to clean the inner wall of the reagent needle 502; the other path of the first valve 702 is connected to the first needle washing tank so as to clean the outer wall of the reagent needle 501; the first plunger pump 703 can be used for extracting and discharging a reagent solution through the reagent needle 501;
The sample needle 401 inner side clean water cleaning liquid path includes a clean water bucket 720, a second pump 704, a second valve 705, a second plunger pump 706 and a fourth valve 711 which are communicated in sequence; the second plunger pump 706 is connected to the inner part of a sample needle 401 through a sample needle connector 715; when the fourth valve 711 is switched on, the sample needle 401 inner side clean water cleaning liquid path is used for cleaning the inner wall of the reagent needle 401; the second plunger pump 706 can be used for extracting and discharging a sample solution through the sample needle;
The sample needle 401 outer side cleaning liquid path includes a liquid cleaning bucket 721, a third pump 707 and a third valve 708 which are communicated in sequence; the sample needle 401 is arranged in a second needle washing tank; the third valve 708 is connected to the outer wall of the second needle washing tank; and when the third valve 708 is switched on, the sample needle 401 outer side cleaning liquid path is used for cleaning the outer wall of the sample needle 401.

The liquid path system further includes a condensate and waste liquid discharging liquid path; the condensate and waste liquid discharging liquid path includes a waste liquid needle 502, a fifth pump 712 and a fifth valve 713 which are communicated in sequence; one path of the fifth valve 713 is connected to the reagent tray through a reagent tray connector 716, and the other path of the fifth valve is connected to the waste liquid needle 502 through a waste liquid needle connector 717; the fifth pump 712 is used for discharging condensate in the reagent tray and waste liquid sucked by the waste liquid needle 502 into a waste liquid bucket 722.

The bottom of the first needle washing tank is connected to a fourth pump 710; and the fourth pump 710 is used for discharging the waste liquid of the first needle washing tank into the waste liquid bucket 722.

The bottom of the second needle washing tank is connected to a sixth pump 715; and the sixth pump 715 is used for discharging the waste liquid of the second needle washing tank into the waste liquid bucket 722.

A filter 719 and a connection joint 718 are further arranged between the clean water bucket 720 and the first pump 701 and between the clean water bucket 720 and the second pump 704.

A filter and a connection joint are further arranged between the liquid cleaning bucket 721 and the third pump 707.

A filter is arranged between the reagent tray and the fifth valve 713.

The incubation unit 9 includes an incubation rack 901, a thermostat 902 and an incubation sensor 903; the incubation rack 901 is provided with a plurality of spaces for placing strips (cassettes); the thermostat 902 is used for increasing the temperature inside the incubation rack 901; the incubation sensor 903 is used for detecting the environment temperature in the incubation rack 901 at any time; the incubation unit 9 is used for controlling the movement of the incubation rack 901 through an incubation rack motor 904 and an incubation rack guide rail 905 to correspond to the horizontal positions of the strips (cassettes) pushed by the push rod 807.

The detection unit 10 includes a detection clamping seat 1001, a detection clamping seat support 1002, and a detector 1003 arranged above the detection clamping seat 1001; the detection clamping seat support 1002 moves along the guide rail through the motor, the belt and the transmission wheel; the push rod 807 is used for pushing the strips (cassettes) meeting the incubation time of the incubation unit 9 into the detection clamping seat 1001; the detection clamping seat support 1002 is used for driving the detection clamping seat 1001 to move to the lower side of the detector 1003 for detecting; and after the detection is finished, the push rod 807 is used for pushing the strips (cassettes) to a waste material hole 1004; and the waste material hole 1004 is connected to the waste recovery unit.

The fully automatic flow-through immunoassay system and the immunoassay method thereof provided in the present invention can be used to determine a variety of detection items such as C-reactive protein, neutrophil gelatinase-related lipocalin, β-human chorionic gonadotropin, D-dimer, procalcitonin, heparin-binding protein, full C-reactive protein assay, troponin I, creatine kinase isoenzyme, N-terminal pro-brain natriuretic peptide, progesterone, serum amyloid A, heart-type fatty acid-binding protein, B-type natriuretic peptide, myoglobin, growth stimulation expressed gene 2, lipoprotein-associated phospholipase A2, urine microalbumin, anti-Müllerian hormone, P2-microglobulin, interleukin-6, pepsin 1/2, etc. Through adjusting the parameters such as the shaking speed and the incubation reaction time according to the specific detection items, the detections can be achieved by the technology described in the present invention.

The foregoing description only describes the preferred embodiments and the technical principles used in the present invention. Those skilled in the art should be appreciated that the present invention is not limited to the specific embodiments described herein, and that various apparent changes, readjustments and substitutions can be made without departing from the protection scope of the present invention. Therefore, although the present invention has been described in detail through the above embodiments, the present invention is not limited to the above embodiments. Various other equivalent embodiments can also be included without departing from the concept of the present invention, and the protection scope of the present invention is determined by the appended claims.

## Claims

1. A fully automatic flow-through immunoassay system, comprising: a to-be-detected area, a bar code recognition area, a conveying area, a plurality of detection areas, a storage area, a controller and a power supply, wherein each detection area comprises a sample feeding/recovery unit, a conveyor belt unit, a shaking unit, a strip stacking unit, a reaction cup transferring unit, a sample arm, a reagent arm, a reagent chamber unit, an incubation unit, a liquid path unit, a waste recovery unit and a detection unit,
wherein:
the to-be-detected area is connected to the detection area and the storage area by means of the conveying area, the conveying area is provided with the bar code recognition area, the detection area is provided with the sample feeding/recovery unit, one side of each sample feeding/recovery unit is connected to the conveying area, and the other side of each sample feeding/recovery unit is provided with the conveyor belt unit, the conveyor belt unit is adjacent to the shaking unit, the sample arm is arranged above the shaking unit, one side of the sample arm is provided with the strip stacking unit, the strip stacking unit is provided with a strip conveying mechanism, the reaction cup transferring unit is adjacent to the reagent arm, the waste recovery unit is arranged below the reaction cup transferring unit, one side of the reagent arm is provided with the reagent chamber unit, and the other side of the reagent arm is provided with the incubation unit; one side of the incubation unit is provided with the detection unit, pushing mechanisms are arranged among the strip stacking unit, the incubation unit and the detection unit, and the sample arm and the reagent arm are connected with the liquid path unit.

2. The fully automatic flow-through immunoassay system of claim 1, wherein a sensor and the push rod are arranged between the conveying area and the storage area and the sample feeding/recovery unit, pull sheets are arranged at two sides of channels in the to-be-detected area, the storage area and the sample feeding/recovery unit respectively; the pull sheets are retractable movable pull sheets.

3. The fully automatic flow-through immunoassay system of claim 1, wherein the shaking unit comprises a test tube clamp, an anti-falling strip, a motor for shaking, a Z-axis motor and a Y-axis motor, the anti-falling strip is arranged above the test tube clamp, the motor for shaking is movably connected to the test tube clamp, the Z-axis motor is movably connected to the motor for shaking by means of a Z-axis motor bracket, the Y-axis motor is movably connected to the Z-axis motor by means of a Y-axis motor bracket.

4. The fully automatic flow-through immunoassay system of claim 1, wherein the strip stacking unit comprises clamping frames, fetching-clamping arms, push rods, clamping frame code scanners and clamping frame code scanner brackets, strips are placed in the clamping frames, the clamping frame code scanners are arranged on the rear sides of the clamping frames, the clamping frame code scanners are arranged on the clamping frame code scanner brackets, fetching-clamping arm brackets are arranged below the clamping frame code scanner brackets, the push rods and the fetching-clamping arms are arranged on the fetching-clamping arm brackets, clamping seats are arranged on the fetching-clamping arms, fetching-clamping telescopic rods are arranged below the clamping seats, fetching-clamping hooks are arranged at one ends of the fetching-clamping telescopic rods.

5. The fully automatic flow-through immunoassay system of claim 1, wherein the reaction cup transferring unit comprises a drawer, a reaction cup holder, a gripper, a reaction cup base, a movable cup holder, a gripper moving unit and a reaction cup base guide rail, one and/or more reaction cup holders are arranged in the drawer, the gripper is arranged above the reaction cup holder, the gripper is connected to the gripper moving unit through a gripper bracket, the reaction cup base is connected to the reaction cup base guide rail through the movable cup holder, the gripper moving unit comprises the gripper bracket and a movable bracket, the gripper bracket is arranged on the movable bracket and is movably connected to an X-direction motor, a Z-direction motor is arranged on the gripper bracket, the Z-direction motor is movably connected to the gripper, the guide rail is movably connected to the movable cup holder, the reaction cup base is arranged on the movable cup holder, the reaction cup base is provided with a reset spring, the gripper is provided with an electromagnetic valve and gripping tongs; the reaction cup guide rail is arranged on a guide rail bracket, the guide rail bracket is movably connected to the reagent arm, a double-needle bracket is arranged on the reagent arm, a reagent needle and a waste liquid needle are arranged on the double-needle bracket, and the reagent needle and the waste liquid needle are connected to the liquid path unit.

6. The fully automatic flow-through immunoassay system of claim 1, wherein the sample arm includes a sample needle, a stirring device, a movable rod, a motor bracket, an arm group rotary motor and an arm group hoisting motor, the sample needle is arranged on a sample needle seat, the sample needle seat is connected with the movable rod, the movable rod is provided with the stirring device, the movable rod is connected with the motor bracket, the motor bracket is provided with the arm group rotary motor and the arm group hoisting motor, the sample needle seat is provided with an anti-collision device, the stirring device is provided with a direct-current motor, the direct-current motor is connected with an eccentric sheet, the eccentric sheet is provided with a sample needle through hole, a needle washing tank is arranged below the sample needle through hole, the arm group rotary motor and the arm group hoisting motor on the motor bracket are connected with the movable rod through a transmission wheel and a belt, a code disk is arranged between the movable rod and the arm group rotary motor, and the sample arm is connected to the liquid path unit.

7. The fully automatic flow-through immunoassay system of claim 1, wherein the reagent chamber unit comprises a cooling fan, a cooling fin, reagent bottles, a chamber body, a heat preservation layer, a window, a barcode printer, a sensor, a refrigeration sheet and an air guide device, the reagent bottles are distributed in a reagent tray in a sector shape, the bottom of the reagent tray is connected with a bearing, the reagent tray is provided with notches corresponding to barcodes on the reagent bottles, the chamber body is provided with the window corresponding to the notches, the barcode printer is arranged on one side of the window, the cooling fin is arranged in the center of the reagent tray, the cooling fan is arranged above the cooling fin, the refrigeration sheet is arranged below the chamber body, the refrigeration sheet is connected to the air guide device, the stepping motor and the stepping sensor are connected below the reagent tray, the heat preservation layer is arranged outside the chamber body.

8. The fully automatic flow-through immunoassay system of claim 1, wherein the liquid path unit comprises a reagent needle internal and external cleaning liquid path, a sample needle inner side clean water cleaning liquid path, a sample needle outer side cleaning liquid path and a waste liquid discharging liquid path.

9. A fully automatic flow-through immunoassay method, is realized through the following steps in a system comprising a to-be-detected area, a bar code recognition area, a conveying area, a plurality of detection areas, a storage area, a controller and a power supply, each detection area comprising a sample feeding/recovery unit, a conveyor belt unit, a shaking unit, a strip stacking unit, a reaction cup transferring unit, a sample arm, a reagent arm, a reagent chamber unit, an incubation unit, a liquid path unit, a waste recovery unit and a detection unit, wherein:
step 1, conveying samples in the to-be-detected area through the conveying area, scanning codes during conveying to obtain the information of current to-be-detected samples;
step 2, acquiring empty reaction cups from the reaction cup transfer units;
step 3, conveying the current to-be-detected samples to the corresponding detection areas according to the obtained information of the to-be-detected samples, preparing corresponding strips by the strip stacking units, and preparing corresponding reagents by the reagent chamber units;
step 4, enabling the to-be-detected samples to enter the detection areas, shaking the to-be-detected samples by the shaking units;
step 5, extracting the prepared reagents from the reagent chamber units, injecting the reagents into the reaction cups, and then cleaning the reagent arm;
step 6, extracting the to-be-detected samples which are shaken up by the sample arms and injecting the samples into the reaction cups, stirring, and then conveying the detected samples to the storage area;
step 7, extracting the stirred mixed solution by the sample arms, adding the mixed solution to the prepared strips, and then cleaning the sample arms, extracting a residual solution in the reaction cups by the reagent arms, then pushing the empty reaction cups to the waste recovery units, and cleaning the empty reaction cups;
step 8, conveying the strips added with the mixed solution into the incubation units, and meanwhile setting the incubation time;
step 9, conveying the strips meeting the incubation time into the detection units for detection, and after the detection is finished, discarding the strips; and
step 10, obtaining the detection information.
